(19) **Europäisches Patentamt**

**European Patent Office**

**Office européen des brevets**

(11) **EP 1 715 204 A1**

(12) **EUROPEAN PATENT APPLICATION**
published in accordance with Art. 158(3) EPC

(43) Date of publication:
**25.10.2006 Bulletin 2006/43**

(51) Int Cl.:
*F16C 33/62* (2006.01)   *F16C 33/64* (2006.01)
*F16C 19/46* (2006.01)   *C21D 9/40* (2006.01)

(21) Application number: **05710088.5**

(22) Date of filing: **10.02.2005**

(86) International application number:
**PCT/JP2005/002036**

(87) International publication number:
**WO 2005/078297 (25.08.2005 Gazette 2005/34)**

(84) Designated Contracting States:
**DE FR**

(30) Priority: **12.02.2004  JP 2004035180**
**12.02.2004  JP 2004035259**
**12.02.2004  JP 2004035278**
**28.04.2004  JP 2004132844**
**28.04.2004  JP 2004132953**

(71) Applicant: **NTN CORPORATION**
**Osaka-shi, Osaka 550-0003 (JP)**

(72) Inventors:
• **OISHI, Shinji**
**Iwata-shi,**
**Shizuoka 4388510 (JP)**
• **MATSUNAGA, Hiroshi**
**Iwata-shi,**
**Shizuoka 4388510 (JP)**
• **WATANABE, Yasuyuki**
**Iwata-shi,**
**Shizuoka 4388510 (JP)**
• **HIRAOKA, Tsuneaki**
**Iwata-shi,**
**Shizuoka 4388510 (JP)**

(74) Representative: **Grünecker, Kinkeldey,**
**Stockmair & Schwanhäusser**
**Anwaltssozietät**
**Maximilianstrasse 58**
**80538 München (DE)**

(54) **SHELL TYPE NEEDLE ROLLER BEARING, SUPPORT STRUCTURE OF COMPRESSOR SPINDLE, AND SUPPORT STRUCTURE OF PISTON PUMP DRIVE PART**

(57)    To further reduce the manufacturing cost of a shell type needle roller bearing, and to ensure high quality of the shell type outer ring by subjecting the outer ring to a heat treatment that needs no adjustment of the atmosphere.

The steel sheet to be formed into the shell type outer ring 1 by pressing is made of a medium to high carbon steel containing carbon by not less than 0.3 mass percent. With this arrangement, the material cost and thus the manufacturing cost are lower than when using a conventional low-carbon structural alloy steel sheet or a steel sheet for cold rolling and pressing. Also, it is possible to ensure high quality of the outer ring by subjecting the outer ring to simple heat treatment without the need for carburizing or carbonitriding, which needs adjustment of the atmosphere.

Fig.1

EP 1 715 204 A1

## Description

[Technical field]

The present invention relates to a shell type needle roller bearing, a support structure including the shell type needle roller bearing for supporting a compressor spindle, and a support structure including the shell type roller bearing for supporting the driving portion of a piston pump.

[Background art]

Among needle roller bearings including an outer ring having a radially inner raceway, and a plurality of needle rollers arranged along the raceway of the outer ring is a shell type needle roller bearing including a shell type outer ring formed by pressing including drawing steps. Such a shell type outer ring is formed by pressing a steel sheet made of a casehardened steel such as a low-carbon structural alloy steel sheet of e.g. SCM415 or a steel sheet of e.g. SPC for cold stretch pressing. In order to ensure quality-related characteristics, such as strength and the surface hardness, of the raceway, the steel sheet is subjected to heat treatment such as carburizing or carbonitriding after pressing (as disclosed in patent document 1). There are two types of shell type outer rings, i.e. the open-ended type, which has both ends open, and the closed-end type, which has one end closed. Some needle rollers are mounted in an outer ring together with a retainer, and other are mounted alone in an outer ring (full type).

Such a shell type outer ring is manufactured as follows. A circular steel sheet blank is formed into a cup in a plurality of separate drawing steps; the edge of the cup bottom is restruck to a predetermined radius of curvature; the center of the cup bottom is punched out to form one of the flanges of the outer ring if the outer ring to be formed is of the open-ended type; this step is omitted when forming a closed-end outer ring; the top end of the cup is trimmed to a uniform height in a trimming step; the top end portion of the cup which is to be bent as the other flange of the open-ended cup or the single flange of the closed-end cup is subjected to a thickness-reducing treatment; the cup is subjected to carburization or carbonitriding in a heat treatment step; the top end portion that has been subjected to the thickness-reducing treatment is subjected to annealing; and with needle rollers mounted, the top end of the cup is bent radially inwardly to form the other flange or the single flange.

There is known a compressor for an air-conditioner of the type in which compression elements are actuated by the spindle through a swash plate, with the spindle supported by needle roller bearings mounted in the compressor for supporting radial loads (Patent Document 2). Needle roller bearings are advantageous in that their load capacity and rigidity are relatively large compared to their projected area. Thus, using needle rollers, a compact support structure for a compressor spindle can be designed.

Compactness and low costs, as well as high endurance, are especially acutely required for compressors for vehicle air-conditioners. Further, in order to save energy, to be more environment-friendly, and to improve cooling efficiency, it is a recent tendency to reduce the amount of lubricating oils used to lubricate various parts of the compressor such as bearings. Lubricating oils used for compressors are usually relatively low in viscosity. Since such low-viscosity lubricating oils are used in reduced amounts, today's needle roller bearings for supporting compressor spindles are used in increasingly harsh lubricating conditions.

Thus, if such a needle roller bearing is used to support radial loads applied to a compressor spindle, which is typically rotated at high speed, the bearing tends to suffer from premature surface damage, such as surface-starting peelings, to the raceway of the outer ring. This of course shortens the life of the bearing. Also, since today's compressors are used to compress refrigerants in increasingly higher compression ratios, needle roller bearings used therein tend to be subjected to higher loads. Thus, the outer ring of such a needle roller bearing tends to suffer from peelings starting from inside the outer ring due to repeated loads applied to the outer ring. Either type of peelings shortens the rolling fatigue life of bearings, one of the basic characteristics required for bearings. Quietness during operation is another characteristic required especially for compressors for vehicle air-conditioners. To provide a quiet compressor, it is essential to suppress noise produced from needle roller bearings used therein.

An automatic brake system such as an anti-lock brake system (ABS) or a traction control (TRC) system includes a piston pump assembly to pressure-feed brake fluid in the reservoir tank to the master cylinder. A typical such piston pump assembly includes an electric motor having an armature shaft as the output shaft including an eccentric portion, and a piston pump proper having its piston supported by the armature shaft through a rolling bearing mounted on the eccentric portion of the armature shaft. Thus, by rotating the armature shaft, the piston of the piston pump is reciprocated. (See patent document 3.) In patent document 4, the rolling bearing supporting the piston is a needle roller bearing.

High performance is especially required for such a piston pump if it is used in e.g. a hydraulic brake assist system. Compactness and low costs are also required. One way to increase the capacity of the piston pump is to increase the eccentricity of the eccentric portion of the armature shaft. One way to reduce the size of such a piston pump is to use smaller needle roller bearings to support the piston of the piston pump. Thus, today's needle roller bearings have to bear greater loads with minimum size increase. This increases the possibility of premature peelings starting from inside the outer ring due to repeated loads applied thereto. This shortens the rolling fatigue life of bearings, one of the basic characteristics required for bearings.

Moreover, the lubricating oil for the needle roller bearing supporting the piston of the piston pump tends to be diluted with low-viscosity oil (i.e. brake fluid), and also, the piston of the piston pump repeatedly abuts the outer ring of this needle roller bearing with the needle rollers rolling on the raceway of the outer ring. All these factors serve to promote depletion of oil film on the frictional contact surfaces, which will in turn quicken surface damage, such as surface-starting peelings, to the raceway of the outer ring. This of course shortens the bearing life. Quietness during operation is another characteristic required especially for piston pumps for vehicle brake system. To provide a quiet piston pump, it is essential to suppress noise produced from needle roller bearings used therein.

[Patent document 1] JP patent publication 3073937 (pages 1-2 and Figs. 1-3)

[Patent document 2] JP patent publication 2997047 (page 2 and Figs. 10-12)

[Patent document 3] JP patent publication 8:182254 (page 2 and Fig. 7)

[Patent document 4] JP patent publication 2001-187915 (page 2 and Fig. 9)

[Disclosure of the Invention]

[Problems for which the invention intends to seek solutions]

Low-carbon structural alloy steel sheets and steel sheets for cold rolling and pressing used for steel sheet blanks to be formed into conventional shell type outer rings are well-known for its good formability in pressing. But because it is low in the carbon content, it has to be subjected to heat treatment such as carburizing or carbonitriding by adjusting the heat treatment atmosphere. Thus, they have the following problems.

- A large heat facility is needed, its management and maintenance are troublesome. For example, it is necessary to determine what atmospheric gas should be used, determine the heat treatment temperature and time, manage the hardening oil, and periodically inspect the furnace. When producing a large variety of different kinds of products, each kind in a small lot, different settings are needed for each lot, which is extremely troublesome.
- Diffusion of carbon and nitrogen prolongs the heat treatment time. Since an extremely long time is needed to diffuse carbon and/or nitrogen deep into components, the strength of the inner parts of the components does not sufficiently increase.
- A large batch of blanks are usually treated at one time for high efficiency. This causes a prolonged lead time due to an increase in the number of unfinished products.
- If the heat treatment stops due e.g. to a sudden power outage, many defectives will be produced.
- The greater the number of lots, the greater the possibility of products in different lots mixing together.
- In order to provide the other of the two flanges after mounting the rollers, the open end of the outer ring blank has to be bent. To bend the blank, the blank has to be annealed.

An object of the invention is therefore to further reduce the manufacturing cost of a shell type needle roller bearing, which is used e.g. in a support structure for a compressor spindle or a driving portion of a piston pump, while ensuring high quality of its shell type outer ring by subjecting it to a simple heat treatment that needs no adjustment of the atmosphere.

[Means to solve the problems]

According to the invention, there is provided a shell type needle roller bearing comprising a shell type outer ring formed by pressing a steel sheet and having a radially inner surface, and a plurality of needle rollers arranged along the radialy inner surface of the outer ring, the steel sheet being formed of a medium to high carbon steel containing carbon by 0.3 mass percent or over.

As the material for the steel sheet to be formed into the shell type outer ring by pressing, a medium to high carbon steel containing carbon by not less than 0.3 mass percent is less expensive than a low-carbon structural alloy steel sheet or steel sheet for cold rolling and pressing, which has been a preferred material for conventional such steel sheets. Still, its carbon content is high enough to make expensive carburization and carbonitriding unnecessary. This pushes down the manufacturing cost. Specific materials for the claimed steel sheet that contain carbon by 0.3 mass percent or over include structural carbon steels ranging from S30C to S58C, from SAE1040 to 1095, and tool steel SK5.

The steel sheet is preferably spheroidize-annealed so that the steel sheet retains elongation and flexibility that are high enough to allow the plate to be formed into the shell type outer ring by pressing, even though its carbon content is high.

The spheroidization rate of carbides in the steel sheet after such spheroidize-annealing is preferably not less than 50% so that the steel sheet blank can be formed into the outer ring by pressing in a stable manner. The spheroidization rate is given by the following equation:

$$\text{Spheroidization rate} = \frac{(\text{number of carbides of which the aspect ratio is less than 2})}{(\text{number of the entire carbides})} \times 100 \ (\%)$$

where the aspect ratio is the ratio of the major diameter to the minor diameter

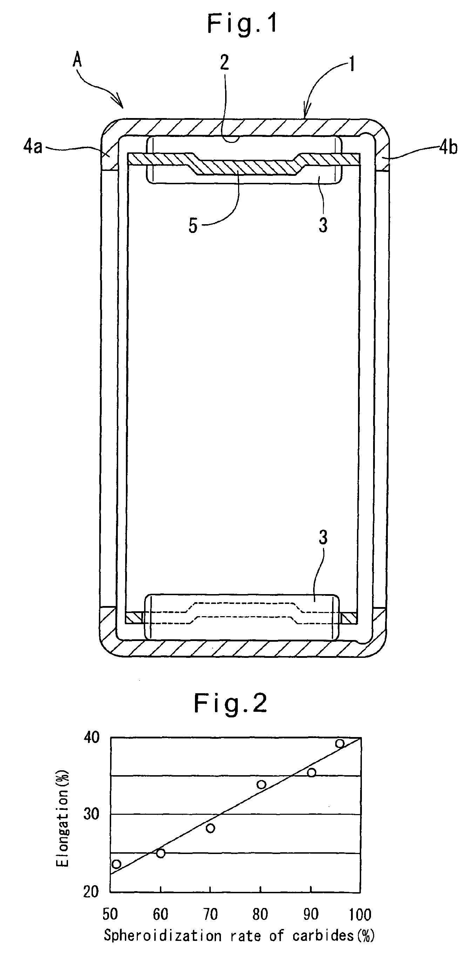

The spheroidization rate is preferably not less than 50% because: in the drawing step for forming the shell type outer ring by pressing, the thickness of the cup decreases most markedly at the arcuate edge of the cup bottom (i.e. by about 10 to 20 percent), so that the cup tends to be broken along the arcuate edge of its bottom. As shown in Fig. 2, which will be described in detail later, the elongation of a steel sheet containing carbon by 0.3 mass percent or over is substantially proportional to the spheroidization rate of carbides in the steel sheet, with the elongation at about 20 percent where the spheroidization rate is about 50 percent. Thus, by setting the spheroidization rate at 50 percent or over, even if the thickness of the cup decreases rather markedly along the arcuate edge of its bottom during the drawing step, the cup will be less likely to be broken.

The outer ring is preferably subjected to induction hardening or bright hardening after pressing to ensure necessary strength and hardness of the outer ring at a minimum heat treatment cost. Induction hardening is particularly advantageous because it needs no large heat treatment facility and the heat treatment time is short. Bright treatment needs no additional time for diffusing carbon or nitrogen so that the heat treatment time is short, too.

Preferably, the steel sheet contains an alloy element of at least one of Si, Ni and Mo by not more than 0.35 mass percent. With this arrangement, pressing becomes easy. While one or a combination of these alloys improve hardening properties, if their content exceeds 0.35 percent by weight, pressing will become difficult. Thus, their content is preferably not more than 0.35 percent by weight.

At least the radially inner surface of the outer ring is subjected to induction hardening and then tempering in a furnace or induction tempering after pressing so that the radially inner surface of the outer ring has a Vickers hardness of 653 HV or over. The bearing thus formed is satisfactory in its basic properties. Induction hardening needs no adjustment of the atmosphere and can be performed using a smaller heat treatment facility. Heat treatment time can be extremely shortened, too. Tempering in a furnace and induction tempering also need no adjustment of the atmosphere and can be performed in a simple manner.

The hardened portion formed by the induction hardening applied to the radially inner surface of the outer ring may be of such a depth that the hardened portion stops short of the radially outer periphery of the outer ring.

Preferably, the radially inner surface of the outer ring has a circumferential roughness average RA in the range of between 0.05 and 0.3 micrometers so as to reduce the sound level when the needle rollers are rolling on the radially inner surface of the outer ring, thereby providing a quieter bearing. The circumferential RA value should not be less than 0.05 micrometers because too smooth a radially inner surface will reduce the lubricating oil retained on the area of the radially inner surfaced that is elastically brought into contact with the needle rollers. This increases the possibility of e.g. smearing. Its upper limit is set at Ra 0.3 micrometers for the following reasons.

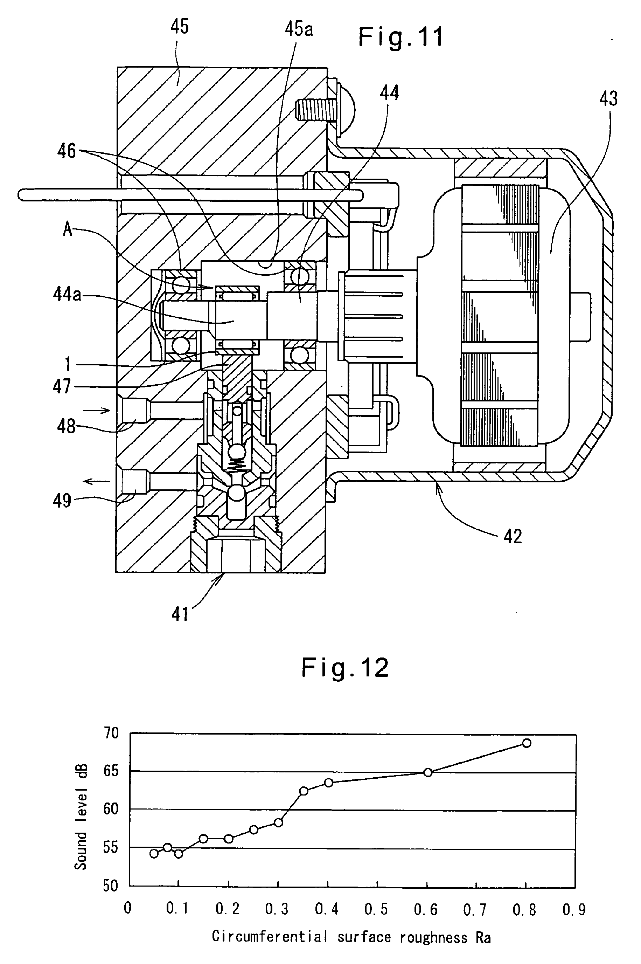

The inventors conducted a sound measurement test using a rotary tester on shell type needle roller bearings of which the radially inner surfaces of their outer rings had different surface roughness values from each other. As a result, it was found out that the lower the circumferential surface roughness of the radially inner surface, the lower the sound level of the bearing. It was also found out that when the Ra value is reduced to 0.3 micrometers or less, the sound level is dramatically decreases, as is apparent from Fig. 12. The reason why the circumferential surface roughness of the radially inner surface has such a large influence on the sound level of the bearing is presumably because if irregularities of the radially inner surface in the rotational direction of the bearing (i.e. the circumferential surface roughness) exceeds a certain threshold relative to the diameter of the needle rollers, the needle rollers tend to rather violently jump up and down when they roll on the radially inner surface of the outer ring, thus producing much noise. Since the needle rollers have a relatively small diameter, they tend to produce much noise if the circumferential roughness average Ra exceeds 0.3 micrometers.

Preferably, the radially inner surface of the outer ring has an axial roughness average RA not exceeding 0.3 micrometers to further reduce the sound level produced when the needle rollers are rolling, thereby further improving the quietness of the bearing. Since the needle rollers have a relatively large length compared to their diameter, widthwise irregularities (axial surface roughness) on the radially inner surface of the outer ring have a large influence on vibrations of the needle rollers. Specifically, if the axial roughness average Ra exceeds 0.3 micrometers, the bearing's noise level tends to jump up.

Preferably, the steel sheet is formed into the outer ring by drawing the steel sheet up to three times, and in the final drawing step, the steel sheet is ironed, too. With this arrangement, it is possible to reduce the number of molds for pressing the steel sheet, and the number of pressing steps. This further reduces the manufacturing cost. Also, by reducing the number of drawings, the dimensions of the cup is less influenced by setting errors of the mold. The dimensional accuracy is thus high.

It is known that a drawing/ironing process provides a higher drawing ratio than simple drawing. That is, when steel plate is drawn, the drawing limit is determined by the point at which the steel plate is broken at the shoulder of the punch due to tensile stress resulting from the deformation resistance of the flange portion of the steel plate and the wrinkle-suppressing force at the flange portion. In the drawing/ironing process, the tensile stress from the flange portion toward the shoulder of the punch is stopped at the ironing portion, so that even a medium to high carbon steel containing carbon by 0.3 mass percent or over, which is typically difficult to draw, can be drawn with a sufficiently high drawing ratio.

The steel sheet may be formed into the outer ring by drawing the steel sheet once, and the steel sheet may be ironed simultaneously when the steel sheet is drawn. With this arrangement, the manufacturing cost further decreases and the dimensional accuracy of the outer ring further improves.

The steel sheet is preferably coated with phosphate so as to increase the ability to retain oil used during pressing, thereby making it possible to use lower-quality oil when forming the outer ring by pressing.

The present invention provides a support structure for supporting a spindle for rotating compression elements, said support structure comprising a needle roller bearing supporting said spindle in the compressor, and said spindle, wherein said needle roller bearing is the above-described shell type needle roller bearing.

The compressor may be an air compressor including a swash plate.

The present invention provides a support structure for supporting a piston pump driver portion, said support structure comprising a motor output shaft of the piston pump, a needle roller bearing mounted on an eccentric portion of said motor output shaft, and a piston supported by said needle roller bearing, wherein said needle roller bearing is the above-described shell type needle roller bearing.

The piston pump may be used in a vehicle anti-lock brake system.

[Advantages of the Invention]

As the material for the steel sheet to be formed into the shell type outer ring by pressing, a medium to high carbon steel containing carbon by not less than 0.3 mass percent is less expensive than a low-carbon structural alloy steel sheet or a steel sheet for cold rolling and pressing, which has been a preferred material for conventional such steel sheets. Still, its carbon content is high enough to make expensive carburization and carbonitriding unnecessary. This pushes down the manufacturing cost.

The steel sheet is preferably spheroidize-annealed so that the steel sheet retains elongation and flexibility that are high enough to allow the plate to be formed into the shell type outer ring by pressing, even though its carbon content is high.

The spheroidization rate of carbides in the steel sheet after such spheroidize-annealing is preferably not less than 50% so that the steel sheet blank can be formed into the outer ring by pressing in a stable manner.

The outer ring is preferably subjected to induction hardening or bright hardening after pressing to ensure necessary strength and hardness of the outer ring at a minimum heat treatment cost. Induction hardening is particularly advantageous because it needs no large heat treatment facility and the heat treatment time is short. Bright treatment needs no additional time for diffusing carbon or nitrogen so that the heat treatment time is short, too.

Preferably, the steel sheet contains an alloy element of at least one of Si, Ni and Mo by not more than 0.35 mass percent. With this arrangement, pressing is easy.

At least the radially inner surface of the outer ring is subjected to induction hardening and then tempering in a furnace or induction tempering after pressing so that the radially inner surface of the outer ring has a Vickers hardness of 653 HV or over. The bearing thus formed is satisfactory in its basic properties. Induction hardening needs no adjustment of the atmosphere and can be performed using a smaller heat treatment facility. Heat treatment time can be extremely shortened, too. Tempering in a furnace and induction tempering also need no adjustment of the atmosphere and can be performed in a simple manner.

Preferably, the radially inner surface of the outer ring has a circumferential roughness average RA in the range of between 0.05 and 0.3 micrometers so as to reduce the sound level when the needle rollers are rolling on the radially inner surface of the outer ring, thereby providing a quieter bearing.

Preferably, the radially inner surface of the outer ring has an axial roughness average RA not exceeding 0.3 micrometers to further reduce the sound level produced when the needle rollers are rolling, thereby further improving the quietness of the bearing.

Preferably, the steel sheet is formed into the outer ring by drawing the steel sheet up to three times, and in the final drawing step, the steel sheet is ironed, too. With this arrangement, it is possible to reduce the number of molds for pressing the steel sheet, and the number of pressing steps. This further reduces the manufacturing cost. Also, by reducing the number of drawings, the dimensions of the cup is less influenced by setting errors of the mold. The dimensional accuracy is thus high.

The steel sheet may be formed into the outer ring by drawing the steel sheet once, and the steel sheet may be ironed simultaneously when the steel sheet is drawn. With this arrangement, the manufacturing cost further decreases and the dimensional accuracy of the outer ring further improves.

The steel sheet is preferably coated with phosphate so as to increase the ability to retain oil used during pressing, thereby making it possible to use lower-quality oil when forming the outer ring by pressing.

The support structure for supporting a compressor spindle according to the present invention includes a shell type needle roller bearing according to the invention to support the spindle. The support structure can thus be manufactured at a lower cost.

The support structure for supporting a piston pump driving portion according to the present invention includes a shell type needle roller bearing according to the invention to support the piston of the piston pump. The support structure can thus be manufactured at a lower cost.

[Brief description of the drawings]

Fig. 1 is an axial sectional view of a shell type needle roller bearing embodying the invention;
Fig. 2 is a graph showing the results of a tensile test conducted on steel sheet blanks to be formed into outer rings according to Example 2;
Fig. 3 is a diagram schematically showing manufacturing steps of the outer ring of Fig. 1;
Figs. 4A and 4B are graphs showing, respectively, the circumferential surface roughness and axial surface roughness of the radially inner surface of the outer ring of Fig. 1;
Fig. 5 is a sectional view of an outer ring according to Example 1 or 2, showing how it is hardened;
Fig. 6 shows sections of outer rings according to Example 3 and modified examples, showing their hardened portions;
Fig. 7 is a graph showing the results of the bearing life test conducted for shell type needle roller bearings of the type shown in Fig. 1;
Fig. 8 is a longitudinal sectional view of a compressor for an air-conditioner including a support structure for supporting a spindle of the compressor according to a first embodiment of the invention;
Fig. 9 is a longitudinal sectional view of a compressor for an air-conditioner including a support structure for supporting a spindle of the compressor according to a second embodiment of the invention;
Fig. 10 is a longitudinal sectional view of a compressor for an air-conditioner including a support structure for supporting a spindle of the compressor according to a third embodiment of the invention;
Fig. 11 is a longitudinal sectional view of a driver for driving a piston pump in which is mounted the shell type needle roller bearing shown in Fig. 1; and
Fig. 12 is a graph showing the relationship between the circumferential surface roughness of the radially inner surface of the outer ring of a shell type needle roller bearing and the sound level measured in a sound measurement test.

| A | Shell type needle roller bearing |
|---|---|
| 1, 1a, 1b, 1c, 1d | Outer ring |
| 2 | Radially inner surface |
| 3 | Needle roller |
| 4a, 4b | Flange |
| 5 | Retainer |
| 11 | Spindle |
| 12 | Swash plate |
| 13 | Shoe |
| 14 | Piston |
| 14a | Recess |
| 15 | Housing |
| 16 | Thrust needle roller bearing |
| 17 | Bore |
| 18 | Spherical seat |

| 21 | Spindle |
|----|---------|
| 22 | Coupling member |
| 22a | Inclined surface |
| 23 | Ball |
| 24 | Thrust needle roller bearing |
| 25 | Swash plate |
| 26 | Piston rod |
| 27 | Piston |
| 28 | Housing |
| 29 | Thrust needle roller bearing |
| 31 | Spindle |
| 32 | Coupling member |
| 33 | Sleeve |
| 34 | Thrust needle roller bearing |
| 35 | Swash plate |
| 36 | Piston rod |
| 37 | Piston |
| 38 | Housing |
| 39 | Thrust needle roller bearing |
| 41 | Piston pump |
| 42 | Electric motor |
| 43 | Armature |
| 44 | Armature shaft |
| 44a | Eccentric portion |
| 45 | Pump housing |
| 45a | Recess |
| 46 | Ball bearing |
| 47 | Piston |
| 48 | Inlet port |
| 49 | Outlet port |

[Best mode for embodying the invention]

Now referring to the drawings, first to Fig. 1, the shell type needle roller bearing embodying the present invention includes a shell type outer ring 1 formed by pressing a steel sheet and having a radially inner surface 2 that serves as a raceway, and a plurality of needle rollers 3 arranged along the inner surface 2. The outer ring 1 shown is the open-ended type, that is, it has flanges 1a and 1b at both ends. The needle rollers 3 are held by a retainer 4.

The steel sheet to be formed into the outer ring 1 by pressing is formed of structural carbon steel S40C containing carbon by 0.4 mass percent (Example 1), formed of tool steel SK5 containing carbon by 0.85 mass percent which is spheroidizing-annealed so that the spheroidization rate of carbides increases to 50 % or over (Example 2), or formed of structural carbon steel S55C containing carbon by 0.55 mass percent and silicon by 0.15-0.35 mass percent, and is coated with phosphate. But the steel sheet to be formed into the outer ring 1 is not limited to one of the above three examples, provided it contains carbon by 0.3 mass percent or over. For example, it may be formed of one of structural carbon steels ranging from S30C to S58C and from SAE1040 to 1095, and bearing steel SUJ2.

Fig. 2 is a graph showing the results of a tensile test conducted on steel sheet blanks of Example 2, i.e. blanks formed of tool steel SK5 and spheroidize-annealed. As explained above, the elongations of the respective steel sheet blanks were proportional to the spheroidization rates of carbides in the respective blanks, with the elongation at about 20% and 40% where the spheroidization rate was 50% and 100%, respectively. Similar results were obtained in tensile tests conducted for structural carbon steels S30C to S58C, SAE1040 to 1095, and bearing steel SUJ2, which all contain carbon by not less than 0.3 mass percent, and which were all spheroidize-annealed.

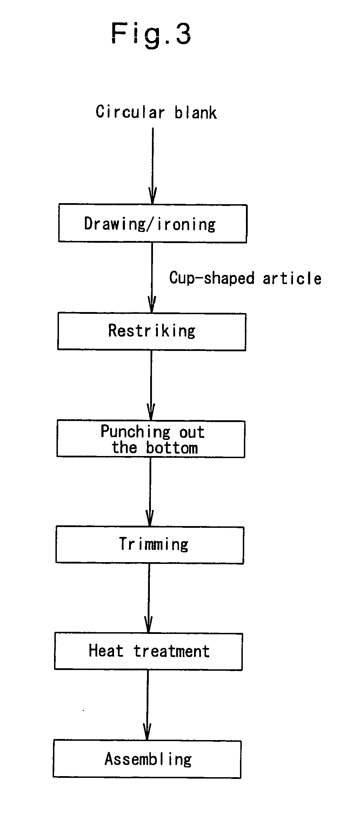

Fig. 3 summarily shows the method of manufacturing the outer ring 1 using the steel sheet of each example. The method comprises a one-time drawing step of drawing a circular steel sheet blank into a cup; a restriking step of restriking the corner of the cup bottom to a predetermined radius of curvature; a punch-out step of punching out the center of the cup bottom to form one of the flanges (i.e. the flange 1a) of the outer ring 1 (Fig. 1); a trimming step of trimming the top end of the cup to a uniform height; the step of reducing the thickness of the top end portion of the cup which is to be bent as the other flange 1b (see Fig. 1); a heat treatment step of subjecting the cup to heat treatment such as induction hardening; and the final step of mounting needle rollers 3 held in a retainer 4 in the cup, and radially inwardly bending the top end portion of the cup at a right angle to form the flange 1b. Since the steel blank is formed into the cup in the one-time drawing step, the shell type outer ring 2 is free from any influence of setting errors of molds, so that it is high in dimensional accuracy.

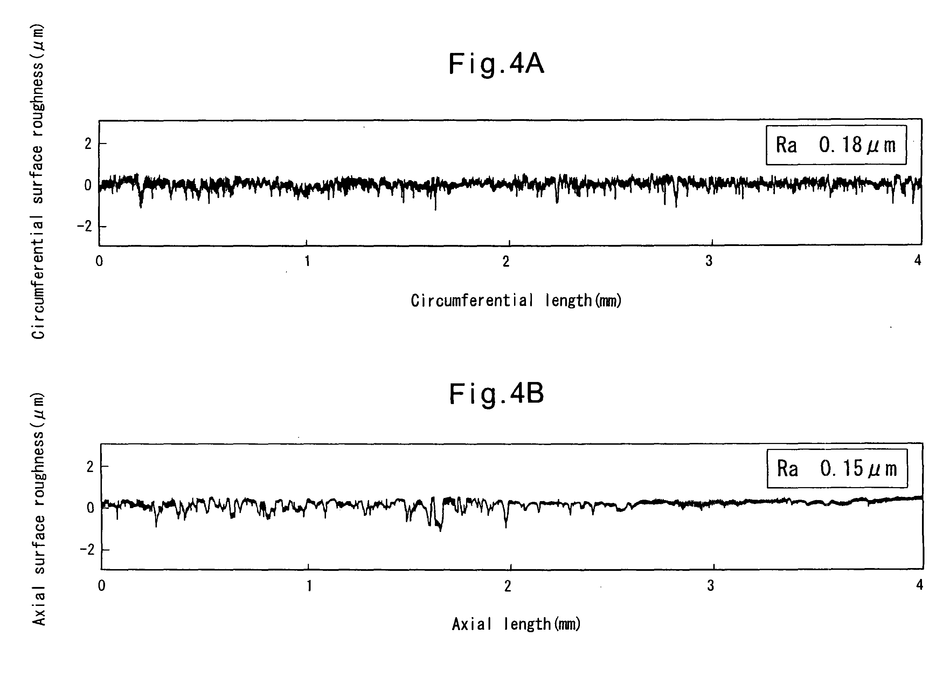

Figs. 4A and 4B show the circumferential surface roughness and the axial surface roughness of the radially inner surface 2 of the outer ring 1. The circumferential surface roughness, shown in Fig. 4A, is a surface roughness profile taken along a circumferential line at the longitudinal center of the outer ring 1. Its Ra value is 0.18 micrometers, which is sufficiently small. While not shown, the circumferential roughness average Ra values measured along circumferential lines spaced 2 millimeters from the respective ends of the outer ring were also in the range of 0.05-0.3 micrometers. The axial surface roughness shown in Fig. 4B was measured along one of four axial lines that are angularly spaced by 90 degrees from the adjacent lines. Its Ra value was 0.15 micrometers, which is sufficiently small. The Ra values measured along the other three axial lines were also very small, i.e. not more than 0.3 micrometers.

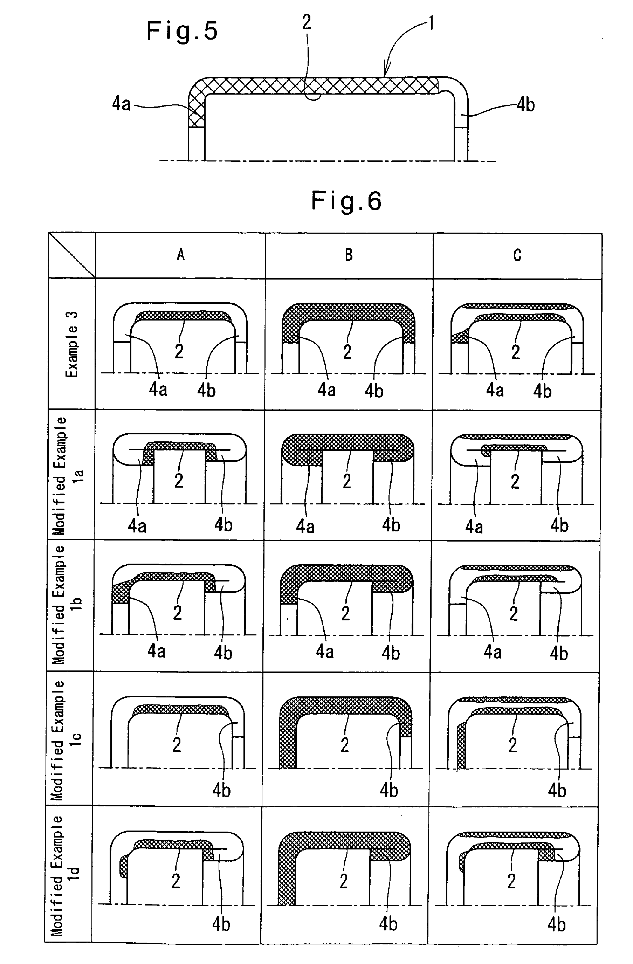

Fig. 5 shows the hardened portion (hatched portion) of the outer ring 1 of either of Examples 1 and 2 when it is induction-hardened. In the example shown, the cylindrical portion of the outer ring 2, where the raceway is formed on the radially inner surface thereof, and the flange 1a, which is formed by punching the bottom of the cup, are induction-hardened. But the flange 1b may also be hardened and then tempered. The other flange 1b, which is formed by bending after mounting the rolling elements, is not hardened. In induction hardening, the hardening process, which comprises heating and cooling, proceeds from one small area to another. The hardening time in each area is relatively short. Thus, the outer ring 1 is less likely to suffer from thermal strains, irrespective of whether the entire outer ring is hardened or it is hardened only partially as shown.

Fig. 6 shows outer rings 1 formed according to Example 3 and outer rings 1a, 1b, 1c and 1d according to modified examples, which are all induction-hardened at their portions indicated by hatches. The outer rings 1a and 1b, as well as the outer rings 1, are of the open-ended type. The flanges 4a and 4b of the outer rings 1a are formed by inwardly bending both end portions thereof by 180 degrees. The outer rings 1b has only the flange 4b bent inwardly by 180 degrees. The outer rings 1c and 1d are of the closed-end type. The outer rings 1c have their only flange 4b bent inwardly by 90 degrees in the same manner as the flanges of the outer rings 1 of Example 3. The outer rings 1d have their only flange 4b bent inwardly by 180 degrees. The outer rings 1 of Example 3 and the outer rings 1a, 1b, 1c and 1d of modified examples were all induction-hardened and then tempered in a furnace or induction-tempered.

Each of the four types of outer rings 1, 1a, 1b, 1c and 1d was hardened in three different patterns each shown in one of the columns A, B and C of Fig. 6. Shades show hardened portions. The outer rings in column A were hardened only at the radially inner surface thereof. The outer rings in column B were hardened entirely. The outer rings in column C were hardened only at their radially inner and outer surfaces. Some of the partially induction-hardened outer rings in columns A and C were also hardened at portions of the flanges 4a and 4b to be brought into abutment with the end faces of the needle rollers 3. Any of these outer rings has a Vicker's hardness of HV 653 on their radially inner surface 2. Induction hardening is performed on a limited area at one time such that any portion of the outer ring is heated only for a short period of time and cooled soon thereafter. Thus, any of the entirely hardened outer rings in column B and the partially hardened outer rings in columns A and C is less likely to suffer thermal strains.

Two groups of shell type needle roller bearings of the type shown in Fig. 1 were prepared. The first group of bearings each included a shell type outer ring formed by pressing a steel sheet of structural carbon steel S40C of Example 1 and induction-hardened in the pattern shown in Fig. 5. The second group of bearings are comparative examples and each include a shell type outer ring formed by pressing and then carburizing and hardening a steel sheet of low-carbon, structural alloy steel SCM415. With each of these two groups of bearings mounted on a rotary shaft of a rotation tester, the rotary shaft was rotated under the following conditions to determine their L10 life (period of time until 10% of the bearings of each group suffer from surface-starting peelings and/or peelings starting from inside).
Load: 4776 N
rpm: 8000
Lubricating oil: multipurpose oil #5 (circulating lubrication)

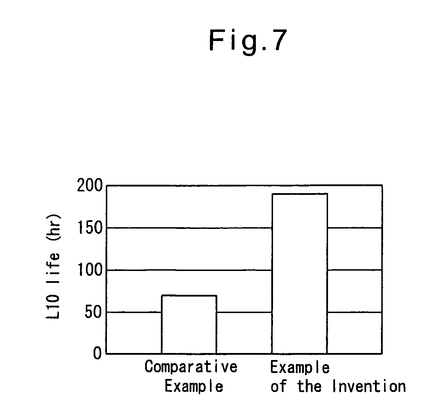

The results of the life test are shown in Fig. 7. As shown, the first group of bearings, i.e. the bearings of which the outer rings were formed of steel plates of structural carbon steel S40C of Example 1 and induction-hardened, showed an L10 life that is nearly three times that of the second group of bearings, of which the outer rings were formed of low-carbon, structural alloy steel SCM415 and carburized and hardened. The test results clearly show that the first group of bearings operate for an extremely long period of time without suffering from surface-starting peelings or peelings starting from inside. Peelings starting from inside were the main cause of shortening of the L10 life of the second group of bearings.

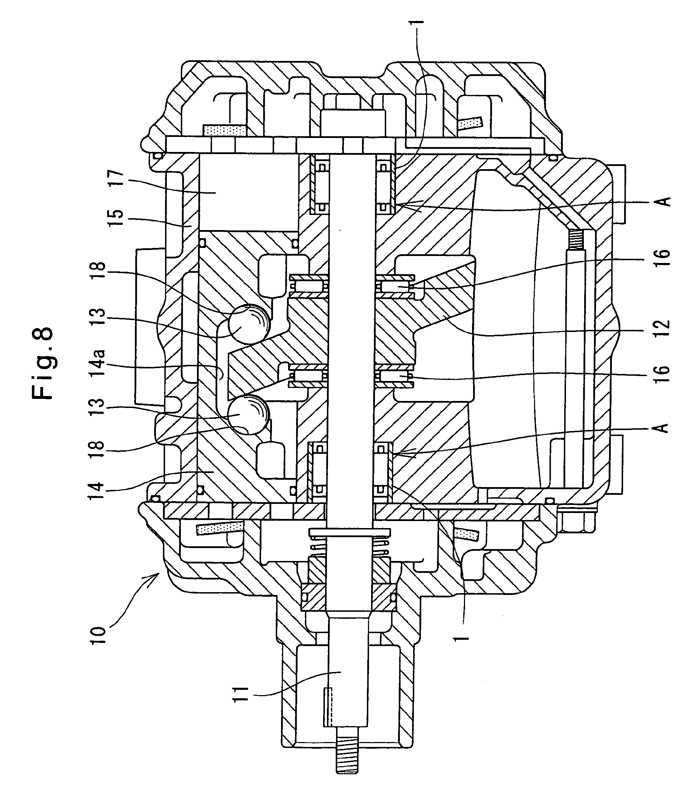

Fig. 8 shows a compressor for a vehicle air-conditioner including a spindle 11 supported by a support structure according to a first embodiment of the present invention. A swash plate 12 is fixed to the spindle 11. When the spindle 11 rotates, the swash plate 12 reciprocates pistons 14 as compression elements through shoes 13 that are slidable on the swash plate 12. The spindle 11, which is rotated at high speed in a housing 15 in which is present a refrigerant, is supported by two shell type needle roller bearings A according to the invention for bearing radial loads, and thrust needle roller bearings 16 for bearing thrust loads.

The housing 15 is formed with a plurality of cylinder bores 17 arranged circumferentially at equal intervals.

Each piston 14 has heads at both ends. Each head is adapted to be slide in one of the bores 17 when the piston 14 is reciprocated. The pistons 14 have recesses 14a that surround the radially outer end of the swash plate 12. The shoes 13 are spherical elements that are seated in spherical seats 18 formed in the axially opposed walls of the recesses 14a. But the shoes 13 may be semispherical members instead. They serve to smoothly convert the rotary motion of the swash plate 12 to reciprocating motion of the pistons 14.

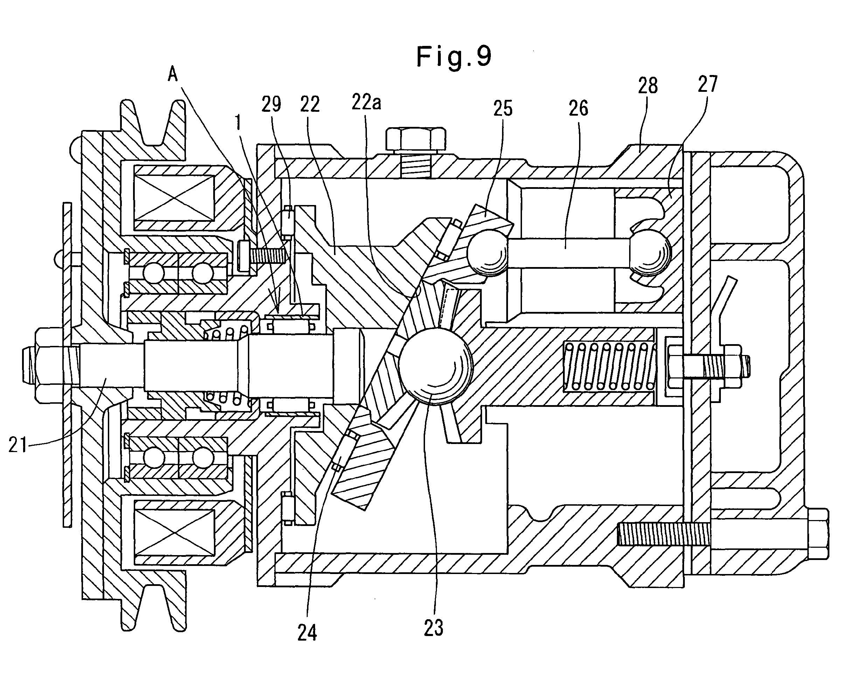

Fig. 9 shows a compressor for a vehicle air-conditioner including a spindle 21 supported by a support structure according to a second embodiment of the present invention. A coupling member 22 is coupled to the spindle 21. The coupling member 22 has an inclined surface 22 on which is supported a ball 23 and a swash plate 25, the latter being supported through a thrust needle roller bearing 24. When the spindle 21 is rotated, the swash plate 25 swings back and forth, thereby reciprocating single-headed pistons 27 through piston rods 26. The spindle 21, which is mounted in a housing 28, is supported by a shell type needle roller bearing A according to the invention for bearing radial loads, and a thrust needle roller bearing 29 for bearing thrust loads.

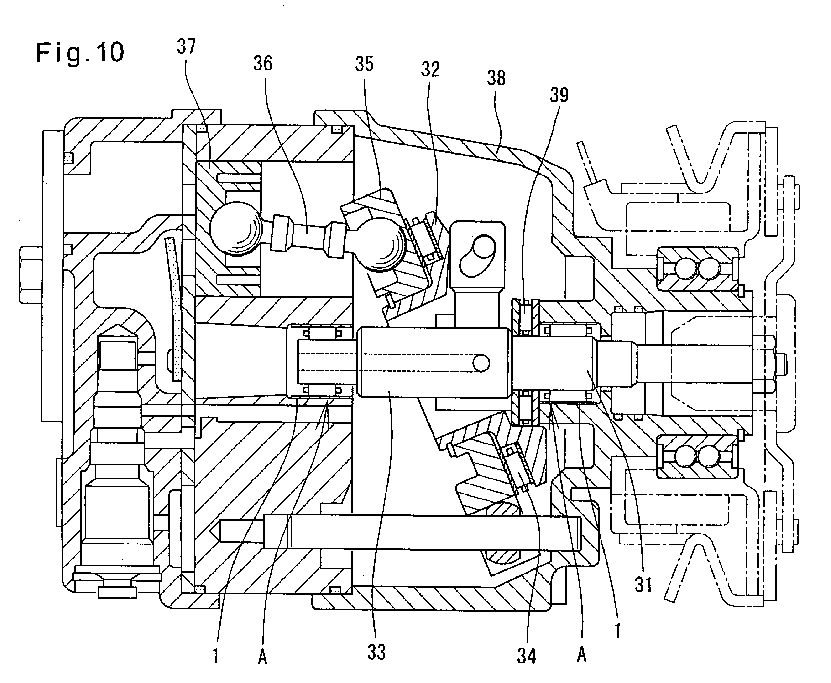

Fig. 10 shows a variable-capacity compressor for a vehicle air-conditioner including a spindle 31 supported by a support structure according to a third embodiment of the present invention. A coupling member 32 is coupled to the spindle 31 such that its inclination angle is adjustable by axially sliding a sleeve 33 fitted on the spindle 31. Otherwise, this embodiment is substantially identical to the second embodiment. That is, the swing motion of a swash plate 35 supported on a thrust needle roller bearing 34 is converted to reciprocating motion of single-headed pistons 37 through piston rods 36. The spindle 31, which is mounted in a housing 38, is supported by two shell type needle roller bearings A according to the invention for bearing radial loads, and a thrust needle roller bearing 39 for bearing thrust loads.

Fig. 8 shows a piston pump 41 in a vehicle anti-lock brake system (ABS) including a support structure embodying the invention for supporting a driver for driving the piston pump. The driver in the embodiment is an electric motor 42. The output shaft of the motor 42, which is an armature shaft 44 of an armature 43, is mounted in a recess 45a formed in a pump housing 45 to extend perpendicular to the piston pump 41 through a pair of ball bearings 46. The piston pump 41 has its piston 47 in abutment with and supported by a shell type needle roller bearing A according to the invention which is fitted on an eccentric portion 44a of the shaft 44. Thus, when the motor 42 is activated, the piston 47 is reciprocated by the shaft 44 through the shell type needle roller bearing A. The pump 41 thus sucks brake fluid through an inlet port 48 formed in the pump housing 45 and discharges it through an outlet port 49. While not shown, the inlet port 48 communicates with a reservoir tank, while the outlet port 49 communicates with a master cylinder.

In the embodiment, the blank is formed into a cup in the one-time drawing step. But the blank may be formed into a cup by drawing the blank twice or three times, and in the final drawing step, the blank may be ironed. The shell type needle roller bearing may not include a retainer so that the needle rollers abut each other.

## Claims

1.  A shell type needle roller bearing comprising a shell type outer ring formed by pressing a steel sheet and having a radially inner surface, and a plurality of needle rollers arranged along said radialy inner surface of said outer ring, said steel sheet being formed of a medium to high carbon steel containing carbon by 0.3 mass percent or over.

2.  The shell type needle roller bearing of claim 1 wherein said steel sheet is spheroidize-annealed.

3.  The shell type needle roller bearing of claim 2 wherein after said spheroidize-annealing, the spheroidization rate of carbides in the steel sheet is 50 percent or over.

4.  The shell type needle roller bearing of any of claims 1-3 wherein said outer ring is subjected to induction hardening or bright hardening after pressing.

5.  The shell type needle roller bearing of any of claims 1-3 wherein said steel sheet contains an alloy element of at least one of Si, Ni and Mo by not more than 0.35 mass percent.

6.  The shell type needle roller bearing of claim 5 wherein at least the radially inner surface of said outer ring is subjected to induction hardening and then tempering in a furnace or induction tempering after pressing so that the radially inner surface of said outer ring has a Vickers hardness of 653 HV or over.

7.  The shell type needle roller bearing of claim 5 or 6, wherein the hardened portion formed by the induction hardening applied to the radially inner surface of said outer ring is of such a depth that said hardened portion stops short of the radially outer periphery of said outer ring.

8. The shell type needle roller bearing of any of claims 1-7 wherein the radially inner surface of said outer ring has a circumferential roughness average RA in the range of between 0.05 and 0.3 micrometers.

9. The shell type needle roller bearing of any of claims 1-8 wherein the radially inner surface of said outer ring has an axial roughness average RA not exceeding 0.3 micrometers.

10. The shell type needle roller bearing of any of claims 1-9 wherein said steel sheet is formed into said outer ring by drawing the steel sheet up to three times, and in the final drawing step, the steel sheet is ironed, too.

11. The shell type needle roller bearing of claim 10 wherein said steel sheet is formed into said outer ring by drawing the steel sheet once, and the steel sheet is ironed simultaneously when the steel sheet is drawn.

12. The shell type needle roller bearing of any of claims 1-11 wherein said steel sheet is coated with phosphate.

13. A support structure for supporting a spindle for rotating compression elements, said support structure comprising a needle roller bearing supporting said spindle in the compressor, and said spindle, wherein said needle roller bearing is the shell type needle roller bearing of any of claims 1-12.

14. The support structure of claim 13 wherein said compressor is an air compressor including a swash plate.

15. A support structure for supporting a piston pump driver portion, said support structure comprising a motor output shaft of the piston pump, a needle roller bearing mounted on an eccentric portion of said motor output shaft, and a piston supported by said needle roller bearing, wherein said needle roller bearing is the shell type needle roller bearing of any of claims 1-12.

16. The support structure of claim 15 wherein said piston pump is used in a vehicle anti-lock brake system.

# Fig.1

# Fig.2

# Fig.3

Circular blank

↓

Drawing/ironing

Cup-shaped article ↓

Restriking

↓

Punching out
the bottom

↓

Trimming

↓

Heat treatment

↓

Assembling

# Fig.4A

Circumferential surface roughness (μm)

Ra   0.18 μm

Circumferential length (mm)

# Fig.4B

Axial surface roughness (μm)

Ra   0.15 μm

Axial length (mm)

# Fig.5

# Fig.6

# Fig.7

EP 1 715 204 A1

Fig.8

16

Fig.9

Fig.10

EP 1 715 204 A1

## Fig.11

## Fig.12

## INTERNATIONAL SEARCH REPORT

| International application No. |
| --- |
| PCT/JP2005/002036 |

A. CLASSIFICATION OF SUBJECT MATTER
   Int.Cl$^7$ F16C33/62, 33/64, 19/46, C21D9/40

According to International Patent Classification (IPC) or to both national classification and IPC

B. FIELDS SEARCHED

Minimum documentation searched (classification system followed by classification symbols)
   Int.Cl$^7$ F16C33/58-33/64, 19/44-19/48, C21D9/40

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-180203 A (NTN Corp.),<br>26 June, 2002 (26.06.02),<br>Fig. 2; Par. Nos. [0038] to [0040]; table 1<br>(Family: none) | 1,5<br>2-4,6-16 |
| Y | JP 6-299240 A (Nippon Steel Corp.),<br>25 October, 1994 (25.10.94),<br>Table 4<br>(Family: none) | 2-3 |
| Y | JP 9-316540 A (Aichi Steel Works Ltd.),<br>09 December, 1997 (09.12.97),<br>Claim 2<br>(Family: none) | 2-3 |

[X] Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>   18 May, 2005 (18.05.05) | Date of mailing of the international search report<br>   14 June, 2005 (14.06.05) |
| --- | --- |
| Name and mailing address of the ISA/<br>   Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2005/002036 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 52-127417 A  (Koyo Seiko Co., Ltd.),<br>26 October, 1977 (26.10.77),<br>(Family: none) | 4,6-7 |
| Y | JP 7-119748 A  (NSK Ltd.),<br>09 May, 1995 (09.05.95),<br>Claim 1<br>& US 5456538 A | 8-9 |
| Y | JP 2003-4051 A  (NTN Corp.),<br>08 January, 2003 (08.01.03),<br>Claim<br>(Family: none) | 10-11 |
| Y | JP 2002-31212 A  (Koyo Seiko Co., Ltd.),<br>31 January, 2002 (31.01.02),<br>Claims<br>(Family: none) | 12 |
| Y | JP 2002-257144 A  (NSK Ltd.),<br>11 September, 2002 (11.09.02),<br>Technical field to which the invention pertains<br>(Family: none) | 13-16 |
| P,Y | JP 2005-30582 A  (NSK Ltd.),<br>03 February, 2005 (03.02.05),<br>(Family: none) | 1-16 |
| A | JP 47-29219 B1  (NSK Ltd.),<br>01 August, 1972 (01.08.72),<br>(Family: none) | 1-16 |
| A | JP 2003-193200 A  (NSK Ltd.),<br>09 July, 2003 (09.07.03),<br>& US 2003/0123770 A1     & GB 2384833 A | 1-16 |
| A | JP 9-87736 A  (Kawasaki Steel Corp.),<br>31 March, 1997 (31.03.97),<br>(Family: none) | 2-3 |
| A | JP 10-265853 A  (Kawasaki Steel Corp.),<br>06 October, 1998 (06.10.98),<br>(Family: none) | 2-3 |
| A | JP 11-132241 A  (NSK Ltd.),<br>18 May, 1999 (18.05.99),<br>(Family: none) | 8-9 |
| A | JP 2002-294465 A  (NTN Corp.),<br>09 October, 2002 (09.10.02),<br>(Family: none) | 12 |

Form PCT/ISA/210 (continuation of second sheet) (January 2004)

## INTERNATIONAL SEARCH REPORT

| International application No. |
| --- |
| PCT/JP2005/002036 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 11-290918 A  (NTN Corp.),<br>26 October, 1999 (26.10.99),<br>(Family: none) | 12 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3073937 B
- JP 2997047 B
- JP 8182254 A
- JP 2001187915 A